# EUROPÄISCHE PATENTANMELDUNG

(11) **EP 1 391 153 A1**
(43) Veröffentlichungstag der Anmeldung: **25.02.2004**
(21) Anmeldenummer: 03014685.6
(22) Anmeldetag: 27.06.2003
(51) Int. Cl.: A01N 37/12, A01N 37/20, A01N 25/24, A01N 25/34

(54) **Verfahren zur Oberflächenimmobilisierung von antimikrobiellen Polymeren mittels Metallabscheidung**

(30) Priorität: 22.08.2002 DE 10238485
(71) Anmelder: Creavis Gesellschaft für Technologie und Innovation mbH, 45772 Marl (DE)
(72) Erfinder: Ottersbach, Peter, Dr., 51570 Windeck (DE); Inhester, Martina, 45699 Herten (DE)

(57) **Zusammenfassung**

Die Erfindung betrifft ein Verfahren zur Oberflächenimmobilisierung von antimikrobiellen Polymeren, wobei die Oberflächenimmobilisierung der antimikrobiellen Polymere mittels Metallabscheidung erfolgt, sowie eine Metallbeschichtung, die antimikrobielle Eigenschaften aufweist.

## Beschreibung

Die Erfindung betrifft ein Verfahren zur Oberflächenimmobilisierung von antimikrobiellen Polymeren, wobei die Oberflächenimmobilisierung der antimikrobiellen Polymere mittels Metallabscheidung erfolgt, sowie eine Metallbeschichtung, die antimikrobielle Eigenschaften aufweist.

Besiedlungen und Ausbreitungen von Bakterien auf Oberflächen von Rohrleitungen, Behältern oder Verpackungen sind im hohen Maße unerwünscht. Es bilden sich häufig Schleimschichten, die Mikrobenpopulationen extrem ansteigen lassen, die Wasser-, Getränke- und Lebensmittelqualitäten nachhaltig beeinträchtigen und sogar zum Verderben der Ware sowie zur gesundheitlichen Schädigung der Verbraucher führen können.

Aus allen Lebensbereichen, in denen Hygiene von Bedeutung ist, sind Bakterien fernzuhalten. Davon betroffen sind Textilien für den direkten Körperkontakt, insbesondere für den Intimbereich und für die Kranken- und Altenpflege. Außerdem sind Bakterien fern zu halten von Möbel- und Geräteoberflächen in Pflegestationen, insbesondere im Bereich der Intensivpflege und der Kleinstkinderpflege, in Krankenhäusern, insbesondere in Räumen für medizinische Eingriffe und in Isolierstationen für kritische Infektionsfälle sowie in Toiletten.

Gegenwärtig werden Geräte, Oberflächen von Möbeln und Textilien gegen Bakterien im Bedarfsfall oder auch vorsorglich mit Chemikalien oder deren Lösungen sowie Mischungen behandelt, die als Desinfektionsmittel mehr oder weniger breit und massiv antimikrobiell wirken. Solche chemischen Mittel wirken unspezifisch, sind häufig selbst toxisch oder reizend oder bilden gesundheitlich bedenkliche Abbauprodukte. Häufig zeigen sich auch Unverträglichkeiten bei entsprechend sensibilisierten Personen.

Eine weitere Vorgehensweise gegen oberflächige Bakterienausbreitungen stellt die Einarbeitung antimikrobiell wirkender Substanzen in eine Matrix dar.

Daneben stellt auch die Vermeidung von Algenbewuchs auf Oberflächen eine immer bedeutsamere Herausforderung dar, da inzwischen viele Aussenflächen von Gebäuden mit Kunststoffverkleidungen ausgestattet sind, die besonders leicht veralgen. Neben dem unerwünschten optischen Eindruck kann unter Umständen auch die Funktion entsprechender Bauteile vermindert werden. In diesem Zusammenhang ist z.B. an eine Veralgung von photovoltaisch funktionalen Flächen zu denken.

Eine weitere Form der mikrobiellen Verunreinigung, für die es bis heute ebenfalls keine technisch zufriedenstellende Lösung gibt, ist der Befall von Oberflächen mit Pilzen. So stellt z.B. der Befall von Fugen und Wänden in Feuchträumen mit Aspergillus niger neben dem beeinträchtigten optischen auch einen ernst zu nehmenden gesundheitsrelevanten Aspekt dar, da viele Menschen auf die von den Pilzen abgegebenen Stoffe allergisch reagieren, was bis hin zu schweren chronischen Atemwegserkrankungen führen kann.

Im Bereich der Seefahrt stellt das Fouling der Schiffsrümpfe eine ökonomisch relevante Einflussgröße dar, da mit dem Bewuchs verbundenen erhöhten Strömungswiderstand der Schiffe ein deutlicher Mehrverbrauch an Kraftstoff verbunden ist. Bis heute begegnet man solchen Problemen allgemein mit der Einarbeitung giftiger Schwermetalle oder anderer niedermolekularer Biozide in Antifoulingbeschichtungen, um die beschriebenen Probleme abzumildern. Zu diesem Zweck nimmt man die schädlichen Nebenwirkungen solcher Beschichtungen in Kauf, was sich aber angesichts der gestiegenen ökologischen Sensibilität der Gesellschaft als zunehmend problematisch herausstellt.

So offenbart z.B. die US-PS 4,532,269 ein Terpolymer aus Butylmethacrylat, Tributylzinnmethacrylat und tert.-Butylaminoethylmethacrylat. Dieses Copolymer wird als antimikrobieller Schiffsanstrich verwendet, wobei das hydrophile tert.-Butylaminoethylmethacrylat die langsame Erosion des Polymers fördert und so das hochtoxische Tributylzinnmethacrylat als antimikrobiellen Wirkstoff freisetzt.

In diesen Anwendungen ist das mit Aminomethacrylaten hergestellte Copolymer nur Matrix oder Trägersubstanz für zugesetzte mikrobizide Wirkstoffe, die aus dem Trägerstoff diffundieren oder migrieren können. Polymere dieser Art verlieren mehr oder weniger schnell ihre Wirkung, wenn an der Oberfläche die notwendige "minimale inhibitorische Konzentration" (MIK) nicht mehr erreicht wird.

Aus der europäischen Patentanmeldung 0 862 858 ist weiterhin bekannt, dass Copolymere von tert.-Butylaminoethylmethacrylat, einem Methacrylsäureester mit sekundärer Aminofunktion, inhärent mikrobizide Eigenschaften besitzen.

Als besonderes Problem bei der technischen Applikation antimikrobieller Polymere stellt sich vor allem die permanente Immobilisierung auf Oberflächen dar. Durch Erosion, Abrasion oder auch durch das Quellverhalten dieser Polymere bedingt, erweist sich die langanhaltende Oberflächenfixierung bis heute als ungelöstes Problem. In der deutschen Patentanmeldung DE 101 49 973 *(zum Zeitpunkt dieser Patentanmeldung noch nicht veröffentlicht)* wird ein Verfahren zur Herstellung extraktionsstabiler Beschichtungen von antimikrobiellen Polymeren durch Minimierung der Beschichtungsdicke beschrieben, allerdings kann auch dieses Verfahren die Quellung, und die damit einhergehende Beschädigung durch partielle Abtrennung von Oberflächenbestandteilen, nicht vollständig unterdrücken.

Der vorliegenden Erfindung liegt daher die Aufgabe zugrunde, ein Verfahren zur Oberflächenimmobilisierung von antimikrobiellen Polymeren zu entwickeln, welches die beschriebenen Nachteile des Standes der Technik nicht aufweist.

Es wurde überraschend gefunden, dass sich eine permanente und stabile Oberflächenimmobilisierung von antimikrobiellen Polymeren mittels Metallabscheidung erhalten läßt, welche dem beschriebenen Anforderungsprofil in nahezu idealer Weise entspricht. Elektrochemisch aussenstromlos sowie mittels äußeren Stroms abgeschiedene Metallbeschichtungen haben sich zur Verbesserung des Verschleißverhaltens von mechanisch beanspruchten Werkstoffoberflächen bewährt und finden heute vielfältige industrielle Anwendung. Das gleichmässige Einlagern der antimikrobiellen Polymere, die in dem Prozeßbad homogen verteilt vorliegen, in die Metallbeschichtung führt zu einer langanhaltenden Oberflächenfixierung der antimikrobiellen Polymere an die bzw. in der Metallbeschichtung.

Gegenstand der vorliegenden Erfindung ist daher ein Verfahren zur Oberflächenimmobilisierung von antimikrobiellen Polymeren, wobei die Oberflächenimmobilisierung der antimikrobiellen Polymere mittels Metallabscheidung erfolgt.

Desweiteren ist Gegenstand der Erfindung eine Metallbeschichtung, die antimikrobielle Eigenschaften aufweist.

Das Verfahren zur Oberflächenimmobilisierung von antimikrobiellen Polymeren, zeichnet sich dadurch aus, dass die Oberflächenimmobilisierung der antimikrobiellen Polymere mittels Metallabscheidung, die entweder außenstromlos oder mittels eines äußeren Stroms erfolgen kann, erfolgt.

Die Metallabscheidung in dem erfindungsgemäßen Verfahren erfolgt bevorzugt aus einem Prozeßbad, das neben dem Fachmann bekannten Bestandteilen zumindest ein antimikrobielles Polymer aufweist. Das zu beschichtende Werkstück wird ganz oder teilweise für eine gewisse Dauer, die abhängig ist von der gewünschten Schichtdicke der Metallbeschichtung, in das Prozeßbad eingetaucht. Um eine gleichmäßige Einlagerung der antimikrobiellen Polymere in die Metallbeschichtung zu erhalten, liegen die antimikrobiellen Polymere vorzugsweise bereits in dem Prozeßbad möglichst fein verteilt und vereinzelt vor. In dem erfindungsgemäßen Verfahren erfolgt daher die Zugabe des antimikrobiellen Polymers vorzugsweise in Form einer wässrigen Dispersion. Diese wässrige Dispersion weist vorzugsweise von 0,01 bis 30 Vol.-%, bevorzugt von 0,1 bis 10 Vol.-% , besonders bevorzugt von 0,3 bis 1 Vol.-% an antimikrobiellen Polymer auf. Alternativ zur Verwendung einer Dispersion des antimikrobiellen Polymeren besteht prinzipiell ebenfalls die Möglichkeit, diese in Form suspendierter, feinster Polymerpartikel einzubringen. Stickstoffhaltige antimikrobielle Polymere gemäß dieser Erfindung können darüber hinaus oftmals durch Säurezugabe und damit einhergehende partielle bzw. quantitative Protonierung der Stickstoffatome in löslichere, und damit für das Verfahren geeignetere Zustandsformen überführt werden. Das Prozeßbad des erfindungsgemäßen Verfahrens weist bevorzugt ebenfalls Wasser als Lösemittel auf.

Abhängig von der dem Prozeßbad des erfindungsgemäßen Verfahrens zugesetzten Menge an antimikrobiellen Polymeren, der Partikelgröße dieser Polymere sowie den gewählten hydrodynamischen Bedingungen beim Abscheidevorgang lassen sich unterschiedliche maximale Einlagerungsvolumina des antimikrobiellen Polymers in der Metallbeschichtungen erzielen.

Die in dem erfindungsgemäßen Verfahren verwendeten antimikrobiellen Polymere werden bevorzugt aus stickstoff- oder phosphorfunktionalisierten Monomeren hergestellt. Besonders geeignet zu diesem Zweck sind antimikrobielle Polymere, die aus mindestens einem Monomeren der Gruppe Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylaminopropylmethacrylamid, Acrylsäure-3-dimethylaminopropylamid, 2-Methacryloyloxyethyltrimethylammoniummethosulfat, 2-Methacryloyloxyethyltrimethylammoniumchlorid, 3-Methacryloylaminopropyltrimethylammoniumchlorid, 2-Acryloyloxyethyl-4-benzoyldimethylammoniumbromid, 2-Methacryloyloxyethyl-4-benzoyldimethylammoniumbromid, Allyltriphenylphosphoniumbromid, Allyltriphenylphosphoniumchlorid, 2-Acrylamido-2-methyl-1-propansulfonsäure, 2-Diethylaminoethylvinylether und/oder 3-Aminopropylvinylether, 3-Aminopropylmethacrylat, 2-Aminoethylmethacrylat, 4-Aminobutylmethacrylat, 5-Aminopentylmethacrylat, 3-Aminopropylacrylat, 2-Aminopropylacrylat, 4-Aminobutylacrylat, 5-Aminopentylacrylat, 2-Aminoethylvinylether, 4-Aminobutylvinylether und 5-Aminopentylvinylether hergestellt werden.

In einer besonderen Ausführungsform des erfindungsgemäßen Verfahrens werden antimikrobielle Polymer eingesetzt, zu deren Herstellung neben den genannten Monomeren weitere aliphatisch ungesättigte Monomere verwendet werden. Diese weiteren aliphatisch ungesättigten Monomere müssen nicht unbedingt eine zusätzliche antimikrobielle Wirkung aufweisen. Geeignete Monomere sind hierfür Acryl-, oder Methacrylverbindungen, wie z. B. Acrylsäure, tert.-Butylmethacrylat, Methylmethacrylat, Styrol oder seine Derivate, Vinylchlorid, Vinylether, Acrylamide, Acrylnitrile, Olefine (Ethylen, Propylen, Butylen, Isobutylen), Allylverbindungen, Vinylketone, Vinylessigsäure, Vinylacetat oder Vinylester, Methacrylsäureethylester, Methacrylsäurebutylester, Acrylsäuremethylester, Acrylsäureethylester, Acrylsäurebutylester und/oder Acrylsäure-tert.-butylester.

Die verwendeten antimikrobiellen Polymere können Molgewichte von 5 000 bis 5 000 000 g/mol, insbesondere 20 000 bis 1 000 000 g/mol, bevorzugt 50 000 bis 500 000 g/mol (Massenmittel) aufweisen.

In einer weiteren Ausführungsform des erfindungsgemäßen Verfahrens werden antimikrobielle Polymere eingesetzt, zu deren Herstellung ein Polymerblend aus antimikrobiellen und nicht-antimikrobiellen Polymeren verwendet wird. Nicht-antimikrobielle Polymere sind in diesem Falle z.B. Polymethylmethacrylat, PVC, Polyacrylsäure, Polystyrol, Polyolefine, Polyterephthalate, Polyamide, Polysulfone, Polyacrylnitril, Polycarbonate, Polyurethan oder Cellulosederivate.

Bei den abgeschiedenen Metallen handelt es sich in dem erfindungsgemäßen Verfahren bevorzugt um Nickel, Kupfer, Silber, Gold, Platin oder Legierungen dieser Metalle, besonders bevorzugt jedoch um Nickel oder Kupfer.

Die Metallabscheidung gemäß dem erfindungsgemäßen Verfahren kann außenstromlos erfolgen, diese basiert auf einem reduktiven Metallniederschlag auf dem zu beschichtenden Werkstoff. Es bestehen für den Fachmann im wesentlichen zwei Möglichkeiten, die Reduktion der Metallionen durchzuführen:
- Abscheidung durch Ladungsaustausch bei der Beschichtung eines unedleren Metalls (Sudabscheidung oder Versudung).
- Abscheidung durch ein Reduktionsverfahren, hierbei werden die zur Reduktion der Metallionen benötigten Elektronen mit Hilfe eines chemischen Reduktionsmittels erzeugt, dessen Standardpotential wesentlich negativer sein muß, als das des abzuscheidenden Metalls. Das Reduktionsmittel wird oxidiert, die abgegebenen Elektronen reduzieren die Metallionen und führen zur Metallabscheidung.

Die in der Literatur noch beschriebene dritte Möglichkeit, die Abscheidung durch Kontaktieren des Grundmetalls mit einem dritten Metall, das als Elektronengeber fungiert, wird in der Praxis kaum verwendet.

Das erfindungsgemäße Verfahren zur Oberflächenimmobilisierung von antimikrobiellen Polymeren mittels außenstromloser Metallabscheidung erfolgt insbesondere durch ein Reduktionsverfahren. Das Prozeßbad des erfindungsgemäßen Verfahren enthält hierbei bevorzugt von 0,01 bis 30 Vol.-%, besonderes bevorzugt von 5 bis 15 Vol.-%, ganz besonders bevorzugt von 8 bis 12 Vol.-% an einer wässrigen Dispersion an antimikrobiellem Polymer.

Neben dem antimikrobiellen Polymer enthält dieses Prozeßbad bei der besonderen Ausführungsform des außenstromlosen Metallabscheidens vorzugsweise zumindest ein Metallsalz des abzuscheidenden Metalls, bevorzugt sind hierbei Acetate, Halogenide oder Sulfate des abzuscheidenden Metalls.

Desweiteren weist dieses Prozeßbad der außenstromlosen Metallabscheidung des erfindungsgemäßen Verfahrens vorzugsweise ein Reduktionsmittel, bevorzugt Natriumhypophosphit, Natriumborhydrid, Alkaliaminborane oder Formaldehyd auf. Das Prozeßbad des erfindungsgemäßen Verfahren kann weiterhin einen Komplexbildner, bevorzugt Oxicarbonsäuren, besonders bevorzugt Citronensäure, Glycin, Ethylendiamin, Ethylendiamintetraessigsäure (EDTA), Kaliumnatriumtartrat, Ethylendiaminpropoxylat, aufweisen.

Die außenstromlose Metallabscheidung des erfindungsgemäßen Verfahrens erfolgt bevorzugt bei einem pH-Wert von 2 bis 12, insbesondere bei einem pH-Wert von 2 bis 7. Um einen konstanten pH-Wert in dem Prozeßbad zu gewährleisten, damit eine pH-Wertänderung den Abscheidungsprozeß nicht beeinträchtigt, werden bevorzugt Puffersubstanzen, insbesondere organische Säuren und deren Alkalisalze, dem Prozeßbad zugegeben.

Vorteil dieser Ausführungsform der außenstromlosen Metallabscheidung des erfindungsgemäßen Verfahrens ist eine gleichmäßige Metallabscheidung mit gleichzeitiger Einbindung der antimikrobiellen Polymere auf der Oberfläche des gesamten Werkstücks, so beispielsweise auch im Rohrinnern, da die Reduktion des Metallions unabhängig von der Geometrie des Werkstücks oder der Anode erfolgt. Man erhält somit an allen Stellen des Werkstückes die gleiche Metallschichtdicke.

Die Metallabscheidung kann in einer weiteren Ausführungsform des erfindungsgemäßen Verfahrens mittels äußeren Stroms erfolgen, dies erfolgt bevorzugt in einer Elektrolysezelle, besonders bevorzugt in einer Glaszelle. Vorteilhaft kann es sein, die Metallabscheidung in einer thermostatisierbaren Elektrolysezelle bzw. Glaszelle durchzuführen.

Das zu beschichtende Werkstück wird bei der Metallabscheidung mittels äußeren Stroms des erfindungsgemäßen Verfahrens vorzugsweise als Kathode geschalten, als Anode dient vorzugsweise Graphit oder das Metall, das an dem zu beschichtenden Werkstück abgeschieden werden soll.

Das Prozeßbad, in diesem Falle das Elektrolysebad, des erfindungsgemäßen Verfahren enthält neben dem Metallsalz, bei dem es sich bevorzugt um das Sulfat oder Halogenid des am Werkstücks abzuscheidenden Metalls handelt, bevorzugt von 0,01 bis 30 Vol.-%, besonderes bevorzugt von 5 bis 15 Vol.-%, ganz besonders bevorzugt von 8 bis 12 Vol.-% an der wässrigen Dispersion des antimikrobiellem Polymers.

Wenn das Metall des Anodenmaterials nicht in dem Elektrolysebad löslich ist, kann es vorteilhaft sein, in regelmäßigen Abständen weiteres Metallsalz dem Elektrolysebad zuzuführen.

Desweiteren ist Gegenstand dieser Erfindung eine Metallbeschichtung, die antimikrobielle Eigenschaften aufweist. Diese erfindungsgemäße Metallbeschichtung zeichnet sich dadurch aus, dass die Oberfläche dieser Metallbeschichtung von 0,1 bis 20 Flächen-%, bevorzugt von 0,2 bis 15 Flächen-%, besonders bevorzugt von 0,5 bis 10 Flächen-% antimikrobielle Polymere aufweist.

Die antimikrobiellen Polymere der erfindungsgemäßen Metallbeschichtung werden bevorzugt aus Stickstoff- oder Phosphorfunktionalisierten Monomeren hergestellt. Besonders geeignet zu diesem Zweck sind antimikrobielle Polymere, die aus mindestens einem Monomeren der Gruppe Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylaminopropylmethacrylamid, Acrylsäure-3-dimethylaminopropylamid, 2-Methacryloyloxyethyltrimethylammoniummethosulfat, 2-Methacryloyloxyethyltrimethylammoniumchlorid, 3-Methacryloyiaminopropyltrimethylammoniumchlorid, 2-Acryloyloxyethyl-4-benzoyldimethylammoniumbromid, 2-Methacryloyloxyethyl-4-benzoyldimethylammoniumbromid, Allyltriphenylphosphoniumbromid, Allyltriphenylphosphoniumchlorid, 2-Acrylamido-2-methyl-1-propansulfonsäure, 2-Diethylaminoethylvinylether und/oder 3-Aminopropylvinylether, 3-Aminopropylmethacrylat, 2-Aminoethylmethacrylat, 4-Aminobutylmethacrylat, 5-Aminopentylmethacrylat, 3-Aminopropylacrylat, 2-Aminopropylacrylat, 4-Aminobutylacrylat, 5-Aminopentylacrylat, 2-Aminoethylvinylether, 4-Aminobutylvinylether und 5-Aminopentylvinylether hergestellt werden.

Die antimikrobiellen Polymere der erfindungsgemäßen Metallbeschichtung zeichnen sich dadurch aus, dass zu deren Herstellung neben den genannten Monomeren weitere aliphatisch ungesättigte Monomere verwendet werden. Diese weiteren aliphatisch ungesättigten Monomeren müssen nicht unbedingt eine zusätzliche antimikrobielle Wirkung aufweisen. Geeignete Monomere sind hierfür Acryl-, oder Methacrylverbindungen, wie z. B. Acrylsäure, tert.-Butylmethacrylat, Methylmethacrylat, Styrol oder seine Derivate, Vinylchlorid, Vinylether, Acrylamide, Acrylnitrile, Olefine (Ethylen, Propylen, Butylen, Isobutylen), Allylverbindungen, Vinylketone, Vinylessigsäure, Vinylacetat oder Vinylester, Methacrylsäureethylester, Methacrylsäurebutylester, Acrylsäuremethylester, Acrylsäureethylester, Acrylsäurebutylester und/oder Acrylsäure-tert.-butylester.

Die verwendeten antimikrobiellen Polymere können Molgewichte von 5 000 bis 5 000 000 g/mol, insbesondere 20 000 bis 1 000 000 g/mol, bevorzugt 50 000 bis 500 000 g/mol (Massenmittel) aufweisen.

In einer weiteren Ausführungsform der erfindungsgemäßen Metallbeschichtung weist diese antimikrobielle Polymere auf, zu deren Herstellung ein Polymerblend aus antimikrobiellen und nicht-antimikrobiellen Polymeren verwendet wird. Nicht-antimikrobielle Polymere sind in diesem Falle z. B. Polymethylmethacrylat, PVC, Polyacrylsäure, Polystyrol, Polyolefine, Polyterephthalate, Polyamide, Polysulfone, Polyacrylnitril, Polycarbonate, Polyurethan oder Cellulosederivate.

Die erfindungsgemäße Metallbeschichtung wird vorzugsweise nach dem erfindungsgemäßen Verfahren hergestellt.

Zur weiteren Beschreibung der vorliegenden Erfindung werden die folgenden Beispiele gegeben, welche die Erfindung weiter erläutern, nicht aber ihren Umfang begrenzen sollen, wie er in den Patentansprüchen dargelegt ist.

### Beispiel 1:

16 mL tert.-Butylaminoethylmethacrylat (Fa. Aldrich), 45 g Triton X 405 (Fa. Aldrich), 200 mL VE-Wasser und 0,6 g Kaliumperoxodisulfat (Fa. Aldrich) werden in einem Dreihalskolben vorgelegt und unter Argonzustrom auf 60 °C erhitzt. Danach werden über einen Zeitraum von 4 Stunden weitere 180 mL tert.-Butylaminoethylmethacrylat zugetropft. Anschließend rührt man die Mischung noch weitere 2 Stunden bei 60 °C, danach lässt man die entstandene Emulsion auf Raumtemperatur abkühlen.

### Beispiel 1a:

Die Schichtbildung erfolgt in einer thermostatisierbaren Glaszelle mit einem Volumen von 200 mL bei einer Temperatur von 55°C an einer Stabelektrode aus Titan. Als Anode findet ein rotationssymmetrischer Nickelzylinder Verwendung. Die Elektrolytlösung besteht aus 150 mL einer Lösung aus 220 g/L NiSO₄*7H₂O, 18 g/L NiCl₂*6H₂O, 18 g/L H₃BO₃ sowie 15 mL des Produktes aus Beispiel 1. Anschließend wird der pH-Wert durch Zugabe von Schwefelsäure auf einen Wert von 3,5, die kathodische Stromdichte auf einen Wert von ca. 10 A/dm² eingestellt. Nach 30 Minuten wird der Versuch beendet und die Titanelektrode entnommen.

### Beispiel 1b:

Die Schichtbildung erfolgt in einer thermostatisierbaren Glaszelle mit einem Volumen von 200 mL bei einer Temperatur von 55 °C an einer Stabelektrode aus Edelstahl. Als Anode findet ein rotationssymmetrischer Nickelzylinder Verwendung. Die Elektrolytlösung besteht aus 150 mL einer Lösung aus 220 g/L NiSO₄*7H₂O, 18 g/L NiCl₂*6H₂O, 18 g/L H₃BO₃ sowie 15 mL des Produktes aus Beispiel 1. Anschließend wird der pH-Wert durch Zugabe von Schwefelsäure auf einen Wert von 3,5, die kathodische Stromdichte auf einen Wert von ca. 10 A/dm² eingestellt. Nach 30 Minuten wird der Versuch beendet und die Edelstahlelektrode entnommen.

### Beispiel 1c:

Die beschichtete Elektrode aus Beispiel 1a wird auf dem Boden eines Becherglases arretiert, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁴ Keime pro mL gesunken.

### Beispiel 1d:

Die beschichtete Elektrode aus Beispiel 1b wird auf dem Boden eines Becherglases arretiert, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁴ Keime pro mL gesunken.

### Beispiel 1e:

Die beschichtete Elektrode aus Beispiel 1a wird auf dem Boden eines Becherglases arretiert, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10³ Keime pro mL gesunken.

### Beispiel 1f:

Die beschichtete Elektrode aus Beispiel 1b wird auf dem Boden eines Becherglases arretiert, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10³ Keime pro mL gesunken.

### Beispiel 1g:

Die Oberfläche der beschichteten Elektrode aus Beispiel 1a wird mit einem feinkörnigen Schmirgelpapier aufgerauht, dann 15 Minuten in 60 °C heißes Wasser gelegt. Anschließend wird die so behandelte Elektrode auf dem Boden eines Becherglases arretiert, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10³ Keime pro mL gesunken.

### Beispiel 1h:

Die Oberfläche der beschichteten Elektrode aus Beispiel 1b wird mit einem feinkörnigen Schmirgelpapier aufgerauht, dann 15 Minuten in 60 °C heißes Wasser gelegt. Anschließend wird die so behandelte Elektrode auf dem Boden eines Becherglases arretiert, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10³ Keime pro mL gesunken.

### Beispiel 2:

18 mL Dimethylaminopropylmethacrylamid (Fa. Aldrich), 43 g Triton X 405 (Fa. Aldrich), 200 mL VE-Wasser und 0,5 g Kaliumperoxodisulfat (Fa. Aldrich) werden in einem Dreihalskolben vorgelegt und unter Argonzustrom auf 60 °C erhitzt. Danach werden über einen Zeitraum von 4 Stunden weitere 180 mL Dimethylaminopropylmethacrylamid zugetropft. Anschließend rührt man die Mischung noch weitere 2 Stunden bei 60 °C, danach lässt man die entstandene Emulsion auf Raumtemperatur abkühlen.

### Beispiel 2a:

Die Schichtbildung erfolgt in einer thermostatisierbaren Glaszelle mit einem Volumen von 200 mL bei einer Temperatur von 55 °C an einer Stabelektrode aus Titan. Als Anode findet ein rotationssymmetrischer Nickelzylinder Verwendung. Die Elektrolytlösung besteht aus 150 mL einer Lösung aus 220 g/L NiSO₄*7H₂O, 18 g/L NiCl₂*6H₂O, 18 g/L H₃BO₃ sowie 15 mL des Produktes aus Beispiel 2. Anschließend wird der pH-Wert durch Zugabe von Schwefelsäure auf einen Wert von 3,5, die kathodische Stromdichte auf einen Wert von ca. 10 A/dm² eingestellt. Nach 30 Minuten wird der Versuch beendet und die Titanelektrode entnommen.

### Beispiel 2b:

Die Schichtbildung erfolgt in einer thermostatisierbaren Glaszelle mit einem Volumen von 200 mL bei einer Temperatur von 55 °C an einer Stabelektrode aus Edelstahl. Als Anode findet ein rotationssymmetrischer Nickelzylinder Verwendung. Die Elektrolytlösung besteht aus 150 mL einer Lösung aus 220 g/L NiSO₄*7H₂O, 18 g/L NiCl₂*6H₂O, 18 g/L H₃BO₃ sowie 15 mL des Produktes aus Beispiel 2. Anschließend wird der pH-Wert durch Zugabe von Schwefelsäure auf einen Wert von 3,5, die kathodische Stromdichte auf einen Wert von ca. 10 A/dm² eingestellt. Nach 30 Minuten wird der Versuch beendet und die Edelstahlelektrode entnommen.

### Beispiel 2c:

Die beschichtete Elektrode aus Beispiel 2a wird auf dem Boden eines Becherglases arretiert, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁵ Keime pro mL gesunken.

### Beispiel 2d:

Die beschichtete Elektrode aus Beispiel 2b wird auf dem Boden eines Becherglases arretiert, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁵ Keime pro mL gesunken.

### Beispiel 2e:

Die beschichtete Elektrode aus Beispiel 2a wird auf dem Boden eines Becherglases arretiert, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁴ Keime pro mL gesunken.

### Beispiel 2f:

Die beschichtete Elektrode aus Beispiel 2b wird auf dem Boden eines Becherglases arretiert, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁴ Keime pro mL gesunken.

### Beispiel 2g:

Die Oberfläche der beschichteten Elektrode aus Beispiel 2a wird mit einem feinkörnigen Schmirgelpapier aufgerauht, dann 15 Minuten in 60 °C heißes Wasser gelegt. Anschließend wird die so behandelte Elektrode auf dem Boden eines Becherglases arretiert, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁴ Keime pro mL gesunken.

### Beispiel 2h:

Die Oberfläche der beschichteten Elektrode aus Beispiel 2b wird mit einem feinkörnigen Schmirgelpapier aufgerauht, dann 15 Minuten in 60 °C heißes Wasser gelegt. Anschließend wird die so behandelte Elektrode auf dem Boden eines Becherglases arretiert, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁴ Keime pro mL gesunken.

## Patentansprüche

1. Verfahren zur Oberflächenimmobilisierung von antimikrobiellen Polymeren,
**dadurch gekennzeichnet,**
**dass** die Oberflächenimmobilisierung der antimikrobiellen Polymere mittels Metallabscheidung erfolgt.

2. Verfahren nach Anspruch 1,
**dadurch gekennzeichnet,**
**dass** es sich bei den abgeschiedenen Metallen um Nickel, Kupfer, Silber, Gold oder Platin handelt.

3. Verfahren nach Anspruch 1 oder 2,
**dadurch gekennzeichnet,**
**dass** die Metallabscheidung außenstromlos erfolgt.

4. Verfahren nach Anspruch 1 oder 2,
**dadurch gekennzeichnet,**
**dass** die Metallabscheidung mittels äußeren Stroms erfolgt.

5. Verfahren nach einem der Ansprüche 1 bis 4,
**dadurch gekennzeichnet,**
**dass** das Prozeßbad zumindest ein antimikrobielles Polymer aufweist.

6. Verfahren nach einem der Ansprüche 1 bis 5,
**dadurch gekennzeichnet,**
**dass** die antimikrobiellen Polymere aus stickstoff- oder phosphorfunktionalisierten Monomeren hergestellt werden.

7. Verfahren nach einem der Ansprüche 1 bis 6,
**dadurch gekennzeichnet,**
**dass** die antimikrobiellen Polymere aus mindestens einem Monomeren der Gruppe Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylaminopropylmethacrylamid, Acrylsäure-3-dimethylaminopropylamid, 2-Methacryloyloxyethyltrimethylammoniummethosulfat, 2-Methacryloyloxyethyltrimethylammoniumchlorid, 3-Methacryloylaminopropyltrimethylammonium-chlorid, 2-Acryloyloxyethyl-4-benzoyldimethylammoniumbromid, 2-Methacryloyloxyethyl-4-benzoyldimethylammoniumbromid, Allyltriphenylphosphoniumbromid, Allyltriphenylphosphoniumchlorid, 2-Acrylamido-2-methyl-1-propansulfonsäure, 2-Diethylaminoethylvinylether und/oder 3-Aminopropylvinylether, 3-Aminopropylmethacrylat, 2-Aminoethylmethacrylat, 4-Aminobutylmethacrylat, 5-Aminopentylmethacrylat, 3-Aminopropylacrylat, 2-Aminopropylacrylat, 4-Aminobutylacrylat, 5-Aminopentylacrylat, 2-Aminoethylvinylether, 4-Aminobutylvinylether und 5-Aminopentylvinylether, hergestellt werden.

8. Verfahren nach Anspruch 7,
**dadurch gekennzeichnet,**
**dass** die antimikrobiellen Polymere zusätzlich mit einem weiteren aliphatisch ungesättigten Monomeren hergestellt werden.

9. Verfahren nach einem der Ansprüche 1 bis 8,
**dadurch gekennzeichnet,**
**dass** die antimikrobiellen Polymere in Form wässriger Dispersionen eingesetzt werden.

10. Verfahren nach Anspruch 9,
**dadurch gekennzeichnet,**
**dass** das Prozeßbad von 0,01 bis 30 Vol.-% der wässrigen Dispersion des antimikrobiellen Polymers aufweist.

11. Verfahren nach Anspruch 5 bis 10,
**dadurch gekennzeichnet,**
**dass** durch Säurezugabe die antimikrobiellen Polymere in eine löslichere Zustandsform überführt werden.

12. Metallbeschichtung, die antimikrobielle Eigenschaften aufweist,
**dadurch gekennzeichnet,**
**dass** die Oberfläche der Metallbeschichtung von 0,1 bis 20 Flächen-% antimikrobielle Polymere aufweist.

13. Metallbeschichtung nach Anspruch 12,
**dadurch gekennzeichnet,**
**dass** die antimikrobiellen Polymere aus Stickstoff- oder Phosphorfunktionalisierten Monomeren hergestellt werden.

14. Metallbeschichtung nach Anspruch 12 oder 13,
**dadurch gekennzeichnet,**
**dass** die antimikrobiellen Polymere aus mindestens einem Monomeren der Gruppe Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylaminopropylmethacrylamid, Acrylsäure-3 -dimethylaminopropylamid, 2-Methacryloyloxyethyltrimethylammoniummethosulfat, 2-Methacryloyloxyethyltrimethyl-ammoniumchlorid, 3-Methacryloylaminopropyltrimethylammonium-chlorid, 2-Acryloyloxyethyl-4-benzoyldimethylammoniumbromid, 2-Methacryloyloxyethyl-4-benzoyldimethylammoniumbromid, Allyltriphenylphosphoniumbromid, Allyltriphenylphosphoniumchlorid, 2-Acrylamido-2-methyl-1-propansulfonsäure, 2-Diethylaminoethylvinylether und/oder 3-Aminopropylvinylether, 3-Aminopropylmethacrylat, 2-Aminoethylmethacrylat, 4-Aminobutylmethacrylat, 5-Aminopentylmethacrylat, 3-Aminopropylacrylat, 2-Aminopropylacrylat, 4-Aminobutylacrylat, 5-Aminopentylacrylat, 2-Aminoethylvinylether, 4-Aminobutylvinylether und 5-Aminopentylvinylether, hergestellt werden.

15. Metallbeschichtung nach Anspruch 12 bis 14,
**dadurch gekennzeichnet,**
**dass** die antimikrobiellen Polymere zusätzlich mit einem weiteren aliphatisch ungesättigten Monomeren hergestellt werden.

16. Metallbeschichtung nach Anspruch 12 bis 15,
**dadurch gekennzeichnet,**
**dass** die Metallbeschichtung nach einem Verfahren gemäß zumindest einem der Ansprüche 1 bis 11 hergestellt wird.
